# EUROPEAN PATENT APPLICATION

(11) **EP 3 546 531 A1**
(43) Date of publication of application: **02.10.2019**
(21) Application number: 18164365.1
(22) Date of filing: 27.03.2018
(51) Int. Cl.: C09D 7/62, C09C 1/00, C08K 9/06, C08K 9/10, C08K 3/08

(54) **METHOD FOR MANUFACTURING BISMUTH VANADATE PIGMENT HAVING AN IMPROVED ALKALINE RESISTANCE**

(71) Applicant: Ferro Performance Pigments Belgium, 8930 Menen (BE)
(72) Inventor: Verspaille, Greta, 8930 Menen (BE); Devreux, Vincent, 8930 Menen (BE); D'Haeveloose, Jurgen, 8930 Menen (BE); Clabaux, Emmanuelle, 8930 Menen (BE); March, Ricard, 08908 L'Hospitalet de Llobregat (ES); Saberi, Ali, 60327 Frankfurt (DE)
(74) Representative: BiiP cvba

(57) **Abstract**

The present invention is directed to a method for manufacturing a bismuth vanadate pigment having an improved alkaline resistance, the method comprising:
i) obtaining a dried bismuth vanadate pigment;
ii) encapsulation of the bismuth vanadate pigment using a functionalized silane of the general formula R-Si(OR')3 wherein R is an alkyl group; and R' is an alkyl group;
iii) final processing of the encapsulated pigment; and
v) drying of the pigment.

In addition, the present invention is directed to a bismuth vanadate pigment encapsulated with a functionalized silane of the general formula R-Si(OR')3 wherein R is an alkyl group; and R' is an alkyl group.

## Description

### Field of Invention

The present invention relates to a method for manufacturing bismuth vanadate pigments, and more particularly to a method for manufacturing bismuth vanadate pigments having an improved alkaline resistance. In addition, invention relates to a bismuth vanadate pigment having improved alkaline resistance.

### Background of the Invention

Paint is any liquid, liquefiable, or mastic composition that, on application to a substrate in the form of a thin layer, converts to a solid film. It is most commonly used to protect, color, and / or to provide texture to objects. It mainly comprises of pigments, binder and liquid. Pigments are finely ground particles or powders, dispersed in paints, which provide coloristic properties to the paint.

Depending upon the application area, especially for facade applications that are exposed to weather extremities such as rain, sunlight, heat and cold, the pigment to be used in paint has to be chosen carefully and is of utmost importance. The paints, generally comprises high Pigment Volume Concentration, when applied to a chemically active substrates, such as a concrete, results in a porous paint film over the surface of the substrate. Such porous nature of the paint film allows oxygen and other gases from air or soluble salts from concrete to penetrate there through, which along with the UV radiation and moisture, cause degradation of the pigments causing premature breakdown of the pigment.

Moreover, the substrates, over a period hardens and produces hydrates like calcium hydroxide which makes the environment alkaline having a general pH value of 12 to 13. Such alkaline attacks the pigments, especially inorganic pigments. Inorganic pigments are nevertheless advisable to be used for façade applications due to their good weather and light performance.

Nowadays, due to environmental awareness, pigments containing cadmium, lead and chromium, have been increasingly regarded as harmful on ecological and toxicological grounds. So alternative pigments, generally free from toxicological concerns, such as bismuth based pigments in particular, have been tested for their coloristic properties.

These bismuth based pigments, while being non-toxic, not only offer the desired coloristic properties, but also inherit good resistance to weather parameters such as light & heat, along with resistance to most of the chemicals. However, these bismuth based pigments are particularly unstable in alkaline media having a pH range from around 8 to 13. Such poor resistance of the pigments may lead to partial or even complete discoloration of the pigment and thus, the coating. This poor resistance of the bismuth based pigments to the alkaline media limits the scope of their use in water-based paints or surface coatings like silicate coatings and plasters. Accordingly, there is a need to improve the alkaline resistance of bismuth based pigment so that it can be used in the paint industry.

Numerous efforts have been made to improve the alkaline resistance of the bismuth based pigments, and in particular bismuth vanadate pigments because of its excellent coloristic properties, excellent opacity and high hiding power.

US5123965 relates to a process for stabilizing BiVa pigment by treating said pigment with a metallic phosphate selected from the group consisting of calcium, magnesium, aluminum, zirconium and titanium orthophosphates. The method, however, results in an alteration of the coloristic properties as well the rheological properties in water based system due to the phosphate derivatives, which is not generally preferred.

US5858080 discloses a method of improving properties such as tinctorial strength, chroma as well as gloss of coloration obtained within a bismuth vanadate pigment by coating it with polyvinyl alcohol. The method, however, doesn't offer the alkaline resistance required for the high pH coatings system applied for the architectural coatings.

US6423131 describes a coating for the bismuth vanadate on calcium fluoride, bismuth oxyfluroide or lanthanide fluoride. Such a coating is targeted to improve chemical resistance properties of the bismuth vanadate. However, it does not increase its resistance properties in alkali media to a desired level.

Other references disclosed different kinds of coatings for bismuth vanadate pigments for improve their properties. For example: US4063956 for instance, discloses coating a bismuth vanadate pigment with a layer of metal oxide hydrate followed by a second dense layer of amorphous silicon dioxide. In another example, US4115141 discloses a method of stabilizing Bismuth vanadate by coating it with silicon dioxide or aluminum phosphate. US4455174 describes coating of a Bismuth vanadate pigment first with zirconium dioxide and then with silicon dioxide. EP271813 describes fluoride metal oxide coatings based on silicon dioxide, magnesium silicate and magnesium fluoride mixed with a wax layer.

Although all these disclosed methods offered higher chemical resistance along with other improvement in properties of bismuth vanadate pigments, none of them was much effective in increasing the resistance of bismuth vanadate pigments in alkaline media to a desired level, particularly within the high alkaline architectural coatings.

In some other recognized efforts, several pigments are blended along with the Bismuth vanadate, with an objective to take advantage of the good coloristic properties of the bismuth vanadate pigments and balance the weakness in alkaline resistance due to very strong pigments in alkaline media. One such example is mentioned in WO2014055555, which discloses a colorant comprising a mixture of pigments. The pigments have a similar coloration but different resistance to corrosion. The mixing ratio is selected to optimize the corrosion resistance against color brightness, and/or acidic corrosion resistance against alkali corrosion resistance of the colorant. This method however, is also not preferred as it drastically decreases the coloristic properties of the bismuth vanadate pigment.

Accordingly, there is a need in art for a method of improving the chemical resistance properties, particularly the resistance to alkaline media, of the bismuth vanadate pigments while retaining their excellent coloristic properties.

### Summary of the Invention

The present invention has been made in the view of the above problems, and discloses a method for manufacturing bismuth vanadate pigment having an improved alkaline resistance by blocking the action of cations present in a coating formulation, keeping a very good level of color strength.

In some embodiments, a functionalized silane of the general formula R-Si(OR')3 wherein R is an alkyl group; and R' is an alkyl is introduced just before spray drying of the pigment. The spray drying of the pigment is necessary to obtain homogeneity of the encapsulation to ensure the distribution of the functionalized silane around the pigment.

In other embodiments, the method includes reslurrying the pigment introducing using a functionalized silane of the general formula R-Si(OR')3 wherein R is an alkyl group; and R' is an alkyl group within the slurry of the pigment thereby encapsulating the bismuth vanadate pigment. Thereafter, the pigment is dried and processed to obtain the bismuth vanadate pigment having desired alkaline resistance properties.

Preferably, the functionalized silane is of the general formula R-Si(OR')3 wherein R is an alkyl group having more than 10 carbon atom(s); and R' is a methyl or ethyl group.

Preferably, R is an alkyl group having more than 10 carbon atom(s) and having one or more ramifications comprising an aryl group and optionally one or more Fluor atoms.

The functionalized silane may be a mixture comprising (i) a silane from the general formula R-Si(OR')3 wherein R is an alkyl group ; and R' is an alkyl group, and (ii) a functional silane of the group comprising amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane,N-vinylbenzyl-N'-aminoethyl-3-aminopropylpolysiloxane, N-(n-butyl)-3-aminopropyltrimethoxysilane, or any combination of two or more thereof.

Generally, the dried pigment is reslurried by adding an amount of solvent to the dried pigment at a predetermined temperature range and stirring the dispersion for a predetermined period of time.

Preferably, the reslurry is prepared by adding RO water and stirring in a temperature range between 30°C to 40°C for a time period ranging from 80 minutes to 110 minutes.

Optionally, the method further comprises addition of an antifoaming additive and a silica derivative to improve the powder properties of the dried pigment, such as its free flowing ability, non-dusting behavior and non-tackiness during the drying process.

In a further embodiment of the present invention, a method for manufacturing bismuth vanadate pigment having an improved alkaline resistance may further comprise adding a chelating agent. Optionally, the pigment may be slurried using a chelating agent based solution in which the functionalized silane(s) is (are) added.

Preferred chelating agents may be polyacrylate, polyglycosides, or modified organsilane with polyacrylate chain.

In yet another aspect, the present invention discloses a bismuth vanadate encapsulated with a functionalized silane of the general formula R-Si(OR')3 wherein R is an alkyl group having more than 10 carbon atom(s),; and R' is a methyl or ethyl group. More preferably, R is an alkyl group having more than 10 carbon atoms and may have one or more ramifications comprising an aryl group and may contain one or more Fluor atoms This pigment has an improved alkaline resistance which offers vivid color and high color strength against complex inorganic colored pigments at the level never reached with alkaline stable Bismuth vanadate pigments.

Another aspect of the pigment of the present invention is its dispersability. Most of the time the Bismuth vanadate with improved alkaline resistance are lower in color strength or are very difficult to disperse which limit the field of applications. On the contrary the pigment of the present invention are easy to disperse, have similar level of color strength than the benchmarking and have almost equal alkaline resistance than the organic pigments.

The details of one or more implementations are set forth in the accompanying drawings and the description below. Other aspects, features and advantages of the subject matter disclosed herein will be apparent from the description, the drawings, and the claims.

### Brief Description of drawings

Fig. 1 illustrates a flowchart depicting a method for manufacturing a bismuth vanadate pigment pigment having improved alkali resistance, according to an embodiment of the present invention.
Fig. 2 illustrates a flowchart depicting a method for manufacturing a bismuth vanadate pigment having improved alkali resistance, according to another embodiment of the present invention.
Fig. 3 illustrates a flowchart depicting a method for manufacturing a bismuth vanadate pigment having improved alkali resistance, according to yet another embodiment of the present invention.

### Detailed Description of the Preferred Embodiments

Reference will now be made in detail to the preferred embodiment of the present invention, examples of which are illustrated in the accompanying drawings. Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

In the following detailed description, numerous specific details are set forth in order to provide a thorough understanding of the invention. However, it will be understood by those or ordinary skill in the art that the invention may be practiced without these specific details. In other instances, well known methods, procedures and/or components have not been described in detail so as not to obscure the invention.

Bismuth vanadatepigments are widely used in the coating industry and offer good resistance and coloristic properties. However, one major disadvantage of using Bismuth vanadate pigments is its low alkaline resistance, a feature necessary in certain water based coating formulations like silicate coatings. This limited alkaline resistance of these pigments leads to partial or even complete discoloration of the pigment and thus the coatings. This occurs because the chemical structure of Bi (Bismuth) based pigments are altered when they are exposed to high alkaline environment, due to the presence of high concentration of ions like Na+, K+, Ca+2, Zn2+, Ba2+ etc., which causes the replacement of bismuth ions to form other vanadate salts, leading to the discoloration.

This limitation can be seen by performing alkaline resistance tests of coated plates dipped in alkaline aqueous solutions (NaOH - KOH) which lead to partial discoloration of the plates, the more the discoloration, the less resistant the pigment is to alkaline media. There is consequently a need to improve the alkaline resistance of the pigment for architectural coatings.

The present invention provides a method for manufacturing bismuth vanadate pigment having an improved alkaline resistance by treating in-situ obtained bismuth vanadate pigments with functionalized silane of the general formula R-Si(OR')3 wherein R is an alkyl group preferably having more than 10 carbon atom(s); and R' is an alkyl group, preferably a methyl or ethyl group. Preferably, R is an alkyl group having more than 10 carbon atom(s),; and R' is a methyl or ethyl group. More preferably, R is an alkyl group having more than 10 carbon atoms and may have one or more ramifications comprising an aryl group and may contain one or more Fluor atoms.

Optionally the pigment to be encapsulated may be initially pre-encapsulated by a silica and addition a functionalized silane of the group comprising amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof. This pre-encapsulation may optionally take place just before the treatment with the alkyl silane described in the present invention.

Without being bound by any theory, it is found that this functionalized silane blocks the action of the ions present in the coating formulation thereby improving the alkaline stability while avoiding discoloration of Bi based pigments.

In addition, in some embodiments, adding chelating agents may even more enhance alkaline resistance. In some embodiments, these chelating agents may be prepared in situ via a polymerization.

The general process for the preparation of bismuth vanadate pigments is as follows:
- Highly pure solutions of raw materials are used from which the pigment is precipitated, followed by heat treatment and stabilization.
- The pigment is then separated and purified.
- The purified product is dried and optionally calcined to obtain bismuth vanadate pigments.
Different embodiments of the invention describe the coating of these bismuth vanadate pigments with functionalized silane and optionally chelating agents.

### Embodiment 1:

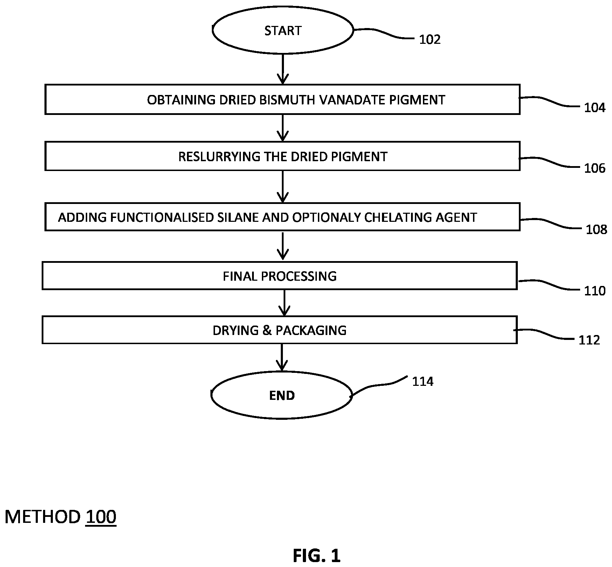

In an embodiment of the present invention discloses a method **100** as illustrated in Fig. 1, for coating of the bismuth vanadate pigments with functionalized silane of the general formula R-Si(OR')3 wherein R is an alkyl group preferably having more than 10 carbon atom(s); and R' is an alkyl group, preferably a methyl or ethyl group. The method **100** starts at step **102** and proceeds to step **104**, where a dried and optionally calcined bismuth vanadate pigment is obtained from an in-situ pigment preparation process. At step **106**, the dried pigment obtained is reslurried. The reslurry of the pigment is prepared by adding an amount of solvent to the dried pigment at a predetermined temperature range and then stirring it to form a homogeneous aqueous dispersion. In one example, the reslurry is prepared by adding water, preferably RO water followed by stirring in a temperature range between 10°C and 100°C, preferably between 70°C to 95°C for a time period ranging between 30 minutes to 140 minutes which is preferably 80 minutes to 110 minutes. In other examples, the pigment may be reslurried in any solvent including, but not limited to municipal water, river water, RO water, glycol based esters, and so on. A pre-encapulation step can also takes place at the end of the step 106 with addition of small amounts of silica or other metal oxides. A person skilled in the art will be able to define the composition of the inner coating, which may be built of a plurality of layers. It may comprise a first layer comprising one or more salts, or one or more oxides, heteropolyacids, organic acids, sulphites, sulfides, sulfates, phosphates, pyrophosphates, polyphosphates, or a combination thereof, selected from the group of alkali-earth metals, metals, non-metals, transition metals or lanthanides, preferably one or more calcium salts or oxides, one or more aluminum salts or oxides, or a combination thereof, and a second layer of silicon dioxide and functionalized or organo modified silane. In addition, the inner coating may comprise a third layer comprising a functionalized silane or an organo modified siloxane or a combination thereof. The method **100** then proceeds to step **108**, where the bismuth vanadate pigment is encapsulated by adding the functionalized silane within the slurry obtained at step **106**. The step of encapsulation is generally responsible for improving the alkaline resistance of the pigment. Once the pigment is encapsulated, the method **100** proceeds to step **110** where the encapsulated pigment is again separated and purified for its final processing which is followed by drying and packaging of the pigment at step **112**.

Optionally and advantageously, a chelating agents may be added at step 106 such as:
- Glycosides and polyglycoside derivatives
- Copolymer of modified organosilane with polyacrylate chain
- EDTA, their corresponding alkali metal salts and EDTA derivatives
- HEDTA and their corresponding alkali metal salts
- NTA and their corresponding alkali metal salts
- Sorbitan and its derivatives
- (Co)polymers of Sodium vinyl sulfonate, sodium styrylsulfonate, (meth)acrylic acid and their corresponding alkali metal salts preferably in combination with non-ionic monomers
- Di- to polycarboxylic acids like citric acid, sorbic acid, oxalic acid, succinic acid, itaconic acid, tartaric acid and their corresponding alkali metal salts
- Trimercaptotriazine and their corresponding alkali metal salts

Preferred chelating agents may be polyglycosides, polyacrylate, or modifyied organsilane with polyacrylate chain.

### Embodiment 2:

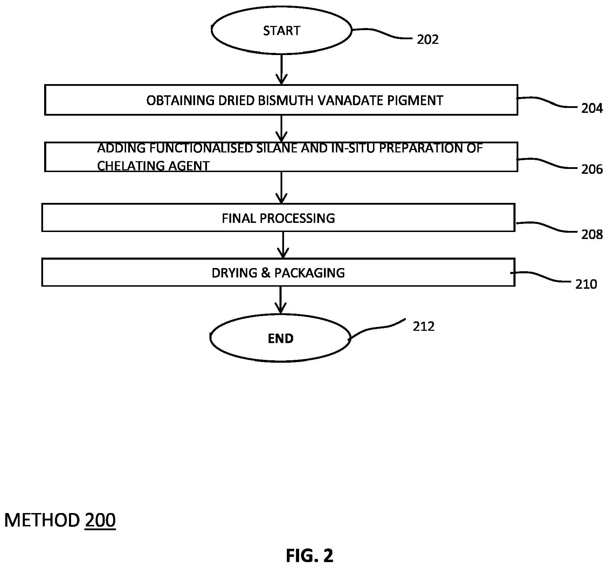

Fig. 2 illustrates an alternative method **200** for coating of the bismuth vanadate pigments with functionalized silane of the general formula R-Si(OR')3 wherein R is an alkyl group preferably having more than 10 carbon atom(s); and R' is an alkyl group, preferably a methyl or ethyl group, and in addition coating with chelating agents in which the chelating agent is prepared via an in situ polymerization. The method **200** starts at step **204** where a dried bismuth vanadate pigment is obtained and proceeds to step 206 where the functionalized silane is added and the chelating agent is polymerized. The step of polymerization involves adding an amount of a reactive ionic monomer followed by a polymerization initiator to the pigment slurry and stirring the dispersion in a temperature range between 20°C to 180°C, for a time period ranging between 30 minutes to 240 minutes, and preferably between 90 minutes to 120 minutes. The step of polymerization process may optionally comprise adding a reactive non-ionic monomer to the dispersion, stirring it in a temperature range between 20°C to 180°C and acidifying the pigment slurry to a pH ranging between 0.5 to 4.0, and preferably between 1.5 to 2.5.

In an embodiment, the monomer may be selected from one or more from the set of monomers comprising [A] one or more functional polymerizable groups selected from an acrylate group or an unsaturated sulfonic group (such as the sodium vinlysulphonate or sodium styrylsulphonate), and [B] one or more nonionic monomers such as, but not limiting to, an alcohol monomer, an epoxide monomer, an organosilane monomer, an organomodified siloxane monomer, a thiol monomer, an amine monomer, an unsaturated carboxylic acid derivatives monomer (such as methacrylate, acrylamide, anhydride monomers), a vinyl monomer, a vinylamine monomer, or any combination thereof

Preferred chelating agent may be polyglycosides polyacrylate, or modifyied organsilane with polyacrylate chain.

After the polymerization is performed, the method **200** proceeds to step **208** where the final processing of the encapsulated pigment is performed proceeded by drying at step **210** to obtain a desired encapsulated pigment.

Final processing is generally dependent upon the type of method used for the synthesis of the pigment. For example, in some embodiments the final processing includes dispersing and milling of the encapsulated pigment. While in some other embodiments, the step of final processing simply includes separation and purification of the encapsulated pigments. The encapsulated pigment with improved alkaline resistance thus obtained is dried and packaged at step **210**.

### Embodiment 3:

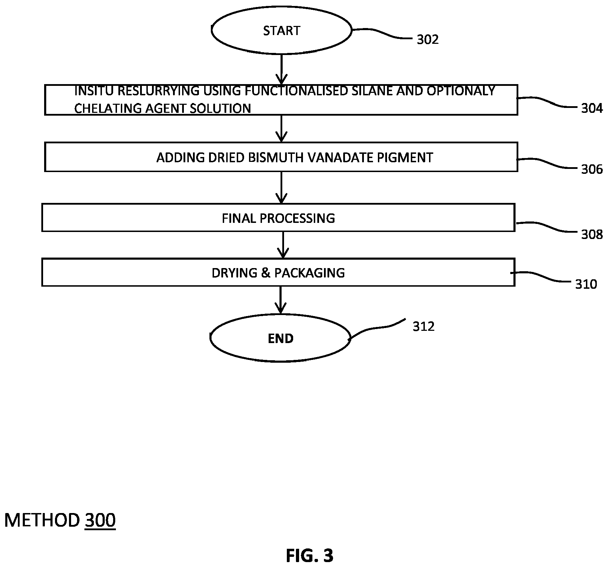

In some examples, as illustrated in FIG. 3 a solution of functionalized silane of the general formula R-Si(OR')3 wherein R is an alkyl group; and R' is an alkyl group is first prepared at step **304**.. Thereafter, a dried bismuth vanadate pigment obtained is added to the functionalized silane based solution which results in an encapsulation of bismuth vanadate pigments at step **306**. Thereafter, final processing of the encapsulated pigment is performed at step **308** proceeded by drying and packaging at step **310** as disclosed in methods **100** and **200.**

Further, chelating agents may be added at step 304.

In some embodiments, the functionalized silane may be introduced just before the spray drying of the pigment. The spray drying of the pigment is necessary to obtain homogeneity of the encapsulation to ensure the distribution of the chelating agent around the pigment. Optionally, the pigment may be slurried in an aqueous solution of the functionalized silane.

### INDUSTRIAL APPLICABILITY

The present disclosure relates to a bismuth vanadate pigment which is encapsulated using a functionalized silane of the general formula R-Si(OR')3 wherein R is an alkyl group preferably having more than 10 carbon atom(s); and R' is a alkyl group, preferably a methyl or ethyl group.

. These pigments inherit improved alkaline resistance, and in particular in cement and lime coatings, in addition to properties such as high resistance against extreme weather conditions. Further, the pigments offers high heat resistance, weather resistance, acid resistance and SO2 resistance and are outstandingly stable under various light conditions.

While being lead- and chromate-free, these pigments meet to a high degree demand for optimum outdoor performance while being suitable for most industrial applications. Accordingly, these pigments are advantageous to be used in various industries such as Paint & Coatings Industry, Automotive & Transportation industries, cosmetic industries, or the like. These pigments are particularly recommended for coatings as well for various plastic applications. Further, pigments are ideal for applications such as automotive finishes (OEM and refinish), high-grade industrial paints, manufacture of colored plastic products.

The bismuth vanadate pigments of the present invention may be used almost everywhere. In particular, logistics and as well in companies in the chemical, painting, cosmetic, packaging, films, cartons and automotive industry as well as aircraft industry requiring highly stable pigment while having excellent resistance to adverse situation.

Typically bismuth vanadate pigments are first choice pigments for uses in coatings field due to their opacity and the brightness of their shade. The conventional architectural coatings for which water based coatings are applied on high alkaline substrate like cement and plaster, lack bright color. The pigments of the present invention may be used in particular in cement or lime coatings with good resistance properties without observed discoloration with the benefit of its color strength and bright shade. The pigment is also usable in all the other coatings due to its non-modified color strength level. It makes the pigment of the present invention a very universal pigment with very broad applicability.

The present disclosure further provides a method, generally referred by the numeral 100, for manufacturing bismuth vanadate pigment having improved alkali resistance. The method is generally a simple, cost efficient, time-saving, method for forming a high quality bismuth pigments.

### EXAMPLE:

Sample preparation : Blend of cement, sand and pigment is prepared in an automatic L mortar mixer (EN-196-1) with a ratio cement 25/sand 75. Sand and pigment (3% versus the cement amount) are dispersed first and mixed for 20 sec. Then water is added and mixed during 20 sec.Cement is finally added with a continue mixing for a further 30 to 60 sec.
- Cement type - Portland Cement White - BL II / A-L 42.5R or (white cement BL-I 52,5 R)
- Sand -CEN-NORMSAND DIN EN 196-1.
The above mixture sand/mortar is placed 24h in mold + 5 days curing in high humidity (without contact with water). Test specimen are 4cm x 4cm x 16cm bar.
2 samples are prepared:
- Reference sample "cement 6616" : with a non-treated BiVa (commercial reference 6616B)
- Sample cement 282RDX : Biva prepared in our lab according to the procedure of the example X above

### Results after curing of the Cement and Sand mixture:

- External surface : color remains in both cases for both materials (reference sample "cement 6616" and sample "cement 282RDX") .
- Internal surface (once we have cut a "slice") :
   ∘ Reference "cement 6616" : color loss
   ∘ Sample "cement 282RDX : color is still OK"

### Results after 80 days REAL WEATHERING BARCELONA :

- Same results than after curing
- External surface : color remains in both cases for both materials (reference sample "cement 6616" and sample "cement 282RDX") .
- Internal surface (once we have cut a "slice") :
   ∘ Reference "cement 6616" : color loss
   ∘ Sample "cement 282RDX : color is still OK"

## Claims

1. Method for manufacturing a bismuth vanadate pigment having an improved alkaline resistance, the method comprising:
i) obtaining a dried bismuth vanadate pigment;
ii) encapsulation of the bismuth vanadate pigment using a functionalized silane of the general formula R-Si(OR')3 wherein R is an alkyl group; and R' is an alkyl group;
iii) final processing of the encapsulated pigment; and
iv) drying of the pigment.

2. A method according to claim 1, wherein the functionalized silane is of the general formula R-Si(OR')3 wherein R is an alkyl group having more than 10 carbon atoms; and R' is a methyl or ethyl group.

3. A method according to claim 1, wherein the functionalized silane is a mix of (i) a functionalized silane of the general formula R-Si(OR')3 wherein R is an alkyl group having more than 10 carbon atom(s); and R' is a methyl or ethyl group, and (ii) a functional silane of the group comprising amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane, N-vinylbenzyl-N'-aminoethyl-3-aminopropylpolysiloxane, N-(n-butyl)-3-aminopropyltrimethoxysilane, or any combination of two or more thereof.

4. The method of claim 1, wherein the method comprises the step of reslurrying the pigment by adding an amount of water, preferably RO water; stirring said dispersion in temperature range comprised between 10°C and 100°C, preferably between 70°C to 95°C for a time period range comprised between 30 minutes and 140 minutes, preferably between 80 minutes to 110 minutes.

5. The method of claim 1, wherein the encapsulation comprises adding the functionalized silane in a range between 0.1% and 10%, and preferably between 1% and 3% by weight with respect to the pigment.

6. The method of claim 1, wherein the method further comprises adding a chelating agent.

7. The method of claim 6, wherein the chelating agent is a polyglycoside polyacrylate, or modifyied organsilane with polyacrylate chain.

8. The method of claim 6 or 7, wherein the encapsulation comprises adding the chelating agent in a range between 0.1% and 10%, and preferably between 2% and 4% by weight active matter with respect to the pigment.

9. The method of claim 1, wherein the encapsulation comprises slurrying the pigment in an aqueous solution of the functionalized silane and optionally a chelating agent

10. A bismuth vanadate pigment encapsulated with a functionalized silane of the general formula R-Si(OR')3 wherein R is an alkyl group; and R' is an alkyl group.

11. A bismuth vanadate pigment according to claim 10, wherein R is an alkyl group having more than 10 carbon atom(s); and R' is a methyl or ethyl group.

12. A bismuth vanadate pigment according to claim 10 or 11, wherein the functionalized silane is a mixture of (i) a functionalized silane of the general formula R-Si(OR')3 wherein R is an alkyl group; and R' is an alkyl group, and (ii) a functionalized silane of the group comprising amino-3-propyltriethoxysilane, N-(2-aminoethyl-3-aminopropyl)-trimethoxysilane, phenyltriethoxysilane, hexadecyltrimethoxysilane, propyltrimethoxysilane, methyltriethoxysilane, N-benzyl-N-aminoethyl-3-aminopropyltrimethoxysilane,N-vinylbenzyl-N'-aminoethyl-3-aminopropylpolysiloxane, N-(n-butyl)-3-aminopropyltrimethoxysilane, or any combination of two or more thereof.

13. The bismuth vanadate pigment of claim 10, wherein the weight of functionalized silane is 0,1% to 10% and preferably between 1 and 3% by weight of the pigment.

14. A bismuth vanadate pigment according to claim 10 further encapsulated by a layer of chelating agent.

15. The bismuth vanadate pigment of claim 14, wherein the chelating agent is a polyglycoside, polyacrylate, or modifyied organsilane with polyacrylate chain.
